# EUROPEAN PATENT APPLICATION

(11) **EP 3 677 874 A1**
(43) Date of publication of application: **08.07.2020**
(21) Application number: 19305001.0
(22) Date of filing: 02.01.2019
(51) Int. Cl.: G01D 5/353, G01D 5/26

(54) **DETECTING NON-UNIFORMITIES IN AN OPTICAL FIBRE**

(71) Applicant: Nokia Technologies Oy, 02610 Espoo (FI)
(72) Inventor: JENNEVE, Phillippe, 91620 Nozay (FR); BOITIER, Fabien, 91620 Nozay (FR)
(74) Representative: Mills, Julia

(57) **Abstract**

An apparatus and method for detecting an event at or close to an optical fibre, the apparatus comprising: a spatial-mode demultiplexer configured to receive an optical signal transmitted through a multi-mode optical fibre and to demultiplex the received signal. The apparatus further comprises circuitry configured to receive and monitor signals output by the demultiplexer, and in response to detecting a variation in a first demultiplexed signal in a first spatial-mode the variation being indicative of the event, to monitor for a second demultiplexed signal in a second spatial mode. The circuitry is configured to determine a time difference between receipt of the variation in the first demultipexed signal and detection of the second demultiplexed signal and to determine a location of the event from this time difference.

## Description

### TECHNOLOGICAL FIELD

Various example embodiments relate to detecting and localizing events such as touching, bending or squeezing of an optical fibre.

### BACKGROUND

Fibre networks may be subject to malicious intrusion (eavesdropping) and can be damaged, intentionally or not by numerous causes. Fibre sensors such as Bragg gratings may be inserted at different locations in an optical fibre to probe the physical properties of the link and detect unwanted events along the fibre. However, this requires the addition of sensors making it unsuitable for legacy equipment. Furthermore, although such events may be detected, their location is more difficult to determine unless many sensors are used which increases the cost.

It would be desirable to be able to both detect and locate events, such as touching bending or squeezing of an optical fibre.

### BRIEF SUMMARY

According to various, but not necessarily all, embodiments of the invention a first aspect provides an apparatus, comprising: a spatial-mode demultiplexer configured to receive an optical signal transmitted through a multi-mode optical fibre and to demultiplex said received signal; circuitry configured to receive and monitor signals output by said demultiplexer, and in response to detecting a variation in a first demultiplexed signal in a first spatial-mode, said variation being indicative of an event, said circuitry is configured to monitor for a second demultiplexed signal in a second spatial mode; wherein said circuitry is configured to determine a time difference between receipt of said variation in said first demultipexed signal and detection of said second demultiplexed signal and to determine a location of said event triggering said variation from said time difference.

The inventors of the present invention recognised that events at or near an optical fibre which cause disruption or perturbation to the fibre and/or the presence of static non-uniformities within the fibre such as bad splices may cause disruption to an optical signal transmitted along the fibre. Were the wavelength of the signal transmitted to be such that the optical fibre supports multiple spatial modes of that signal, then the event may disrupt the signal transmitted in a first spatial mode and this may couple into a second spatial mode. Signals in different spatial modes travel at different speeds along an optical fibre and this property of the different signals allows an estimation of the location of the event to be performed by detecting the time difference between the detection of the initial variation in the first spatial mode signal and the detection of the arrival of the second spatial mode signal. This time difference provides an indication of the distance to the event and thus, can be used to estimate the location of the event. Thus, an apparatus configured to demultiplex different spatial modes of a signal transmitted through an optical fibre can be used to both detect an event and determine the location of the event by monitoring the different spatial modes transmitted.

In this regard the event that is detected may be some type of non-uniformity in the fibre. This may be a static non-uniformity such as a connector misalignment or a bad fibre splice or it may be a mechanical event causing perturbation of the fibre, such as bending, touching or squeezing of the fibre. The event may be detected from a variation in the first spatial mode signal, and its location estimated by the time taken for the second spatial mode signal generated by the variation in the first spatial mode signal to arrive. The type of variation in the signal may be indicative of the type of non-uniformity and in particular, whether it is a static event or a dynamic event.

This way of detecting the event and estimating the location of the event which uses a detector and demultiplexer to separate the different spatial modes of the signals propagated along the optical fibre being monitored, does not require additional hardware along the length of the fibre and thus, can be used on legacy fibres to detect events along a significant length of the fibre.

Furthermore, as the detecting signal is selected to operate at a wavelength where the optical fibre is a multi-mode fibre for the signal, it can operate in parallel with data transmission along the fibre, the detecting signal using a different channel with a different wavelength.

In some embodiments, said first demultiplexed signal comprises a signal with a Gaussian intensity profile.

In some embodiments, said first demultiplexed signal comprises a first linearly polarised mode LP01 signal.

In some embodiments, said second demultiplexed signal comprises a second linearly polarised mode LP11 signal.

Different types of circuitry may be used to monitor the demultiplexed signals and detect variations indicative of events including mechanical events such as bending, touching or squeezing of the fibre. In some embodiments, said circuitry configured to receive and monitor said demultiplexed signals comprises circuitry configured to measure an intensity of at least one of said signals.

Circuitry configured to measure an intensity of a signal may be sufficient to detect the event in the first spatial mode signal and to detect a signal in the second spatial mode triggered by the event. Such circuitry is low cost simple circuitry making the detection apparatus simple and inexpensive.

In some embodiments, said circuitry configured to receive and monitor said demultiplexed signals comprises circuitry configured to measure the complex electrical field on both polarizations of said at least one signal using a coherent receiver.

Measurements of the complex electrical field and in particular, the phase and amplitude of both polarisations of at least one of the signals may be used to more accurately detect and characterise events. In this regard the complex electrical field of the signal may include information such as intensity, phase, amplitude and polarisation state of the signal, variations in one or more of which may be a good indicator of an event. Such circuitry may be more expensive and complex than an intensity detector, however, it may provide a more accurate estimation of location and be able to characterise the event to some extent. In particular, where the optical signal being transmitted is more complex than a simple pulse, perhaps comprising a particular sequence, detection circuitry configured to detect the complex electrical field of the signal may be particularly suited to accurately detecting the variations and estimate the location of the event. In particular, determination of the fibre impulse response to such a signal may enable the apparatus to determine whether the event is a static event such as a bad splice or other fault, which static event triggers a static response, or a mechanical event such as bending or touching of the fibre, which produces a more dynamic variation on the impulse response.

In some embodiments, said circuitry is configured to detect said variation in response to detecting a variation in a rate of change of intensity of said signal moving above a predetermined value.

The variation may be detected in a number of ways, however, the rate of change of variations in the signal may be a good indicator of an event. Indeed the rate of change may be characteristic of the event and in some embodiments, the rate of change of intensity of the signal may not be used just to detect the event but also to determine the type of event that has occurred.

In some embodiments said circuitry configured to receive and monitor at least one of said demultiplexed signals comprises circuitry configured to measure a state of polarisation of said at least one of said signals.

In some cases the variations in the state of polarisation of the signal and in some cases the rate of change of the state of polarisation of the signal rising above a predetermined value may be used as an indicator for the event.

In some embodiments said circuitry configured to receive and monitor said demultiplexed signals comprises circuitry configured to measure the amplitude and phase of both polarisations of at least one of said signals.

In some embodiments, said circuitry comprises: first circuitry configured to receive and monitor said first demultiplexed signal; and further circuitry configured to receive and monitor said second demultiplexed signal.

In some embodiments the circuitry used to receive and monitor the first and second demultiplexed signals may be the same circuitry, while in other embodiments they may be different.

The first spatial mode signal is the signal that is initially disrupted by the event and thus, may carry more information regarding the event than the signal in the second spatial mode. Thus, in some embodiments, different circuitry to detect the first mode signal and second mode signal may be used, with more complex circuitry such as a coherent detector or a state of polarisation detector being used to detect the first mode signal, allowing this signal to be both detected and perhaps characterised to estimate the nature of the event. The second circuitry may be a more simple intensity detector that detects the arrival of the second mode signal and can be used with the first mode signal to determine a location of the event.

In some embodiments, said circuitry is configured to detect said variation in said signal by detecting a rate of change of a characteristic of said signal rising above a predetermined value.

In some embodiments, said first circuitry is configured to monitor a pattern of said variation in said signal and to determine a type of said event from said pattern.

Variations in the signal in the first spatial mode may be used not only to detect an event but also to determine the type of event. In this regard some mechanical events may have characteristic frequencies associated with them, such that the variation in the state of polarisation for example, that has a particular frequency may be indicative of the event. This may be the case, where a digger for example disrupts an optical fibre, the engine of the digger operating at a particular frequency.

A second aspect provides a system comprising an apparatus according to a first aspect, and further comprising a laser configured to transmit a signal into a portion of said optical fibre remote from said apparatus, said signal having a wavelength such that said optical fibre acts as a multimode fibre for said signal.

In some embodiments, said laser is configured to transmit a pulse-like signal for providing an impulse response of said fibre.

One way to characterise a fibre and to detect changes in the fibre is to measure its impulse response, that is the signal output by the fibre in response to an impulse input. The impulse input may have a number of forms, in some embodiments, said laser is configured to transmit a plurality of pulses. In some embodiments, said laser is configured to transmit a plurality of orthogonal sequences. In some embodiments, said laser is configured to transmit a plurality of Golay sequences.

Although the signal transmitted may simply be a pulse or a plurality of repeating pulses, in some embodiments it may comprise a plurality of orthogonal sequences such as Golay sequences. These sequences have the same mathematical properties as a pulse but are transmitted over a longer timeframe allowing more energy to be transmitted and averaging to occur thereby increasing the probability and accuracy of detection.

A third aspect provides, a method comprising: transmitting a signal along an optical fibre, said signal having a wavelength such that said optical fibre acts as a multimode fibre for said signal; receiving a signal transmitted through said optical fibre; demultiplexing said received signal into separate spatial modes; monitoring a first demultiplexed signal; and in response to detecting a variation in said first demultiplexed signals indicative of an event, monitoring for a signal in a second of said demultiplexed signals; determining a time difference between receipt of said variation in said first demultiplexed signal and receipt of said second demultiplexed signal; and determining a location of said event in dependence upon said determined time difference.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION

Some example embodiments will now be described with reference to the accompanying drawings in which:
FIG. 1 illustrates an example embodiment of a system described herein;
FIG. 2 illustrates an alternative embodiment; and
FIG. 3 illustrates a flow diagram showing the steps of a method according to an example embodiment.

### DETAILED DESCRIPTION

Before discussing the example embodiments in any more detail, first an overview will be provided.

Optical fibres are used to transmit signals over long distances. They can carry a large bandwidth of information but are relatively fragile. Furthermore, fibre networks may be subject to malicious intrusion including eavesdropping. Optical fibre networks are often located alongside other networks (railways, gas, energy etc.) and thus, any system that can detect mechanical events at or near the optical fibre may be used not only to detect such events but also to derive meaningful information and alarms about the operations of these other networks such as attempted robbery of copper cables. This is particularly the case where the same cable pipe is used for both the copper and fibre.

Optical fibres can be effective as sensors and can be used to monitor acoustic waves, temperature or bending along the fibre. Several techniques exist to probe the physical properties of the fibre and extract information from the link. However, although information regarding events along the link can be found very few of these techniques can localise a mechanical event along the fibre. Given the length of the fibres, distances lengths of up to 100km being known, being unable to locate the mechanical event is a major drawback.

The use of dedicated sensors inserted at various locations along a fibre cable could be used to localise events to some extent, however this approach is not compatible with the re-use of legacy fibre cables and would require many sensors to provide accurate information about the position of the events. The inventors recognised that rapid fluctuations in the spatial mode of a signal are an indication of events occurring along a fibre. Furthermore, they recognised that were the signal being transmitted along the fibre to be of a wavelength where the fibre supports multiple modes of that signal then these fluctuations in one spatial mode of the signal will be coupled into a further spatial mode and trigger a signal in that further spatial mode to be transmitted along the fibre. Signals of different spatial modes travel at different speeds along an optical fibre and thus, monitoring for a variation in the original spatial mode signal and using the detection of this variation to trigger the recording of a further spatial mode signal and then determining the time taken for receipt of this second mode signal, enables this time difference to be used as an indication of the distance from the receiver to the event.

In effect a single core multimode fibre is turned into a distributed sensor by using independently two spatial modes of the fibre either with a specific multimode fibre or by downshifting the wavelength of the signal to be transmitted, such that the fibre operates as a multimode fibre for that wavelength and de-multiplexing the spatial modes of the signals when they are received. The polarisation fluctuations of the first spatial mode gives a very good event detection signature with a very high sensitivity but it does not provide the localisation. The second mode however due to the different propagation speed of each mode provides a localisation of the event on the fibre if the difference in time between the two events indicated by the two spatial modes is determined.

It should be noted that embodiments may be used to detect a non-uniformity of a fibre. For example, a connector misalignment or a bad fibre splice would produce a static event on the fibre impulse response. However, a mechanical event such as bending or touching of the fibre, would produce a more dynamic event on the impulse response. Thus, both types of non-uniformities could be detected and they could also be distinguished between from the type of response. Detection and localisation of the mechanical event using this system may be particularly valuable as currently there are very few ways to detect and localise such events.

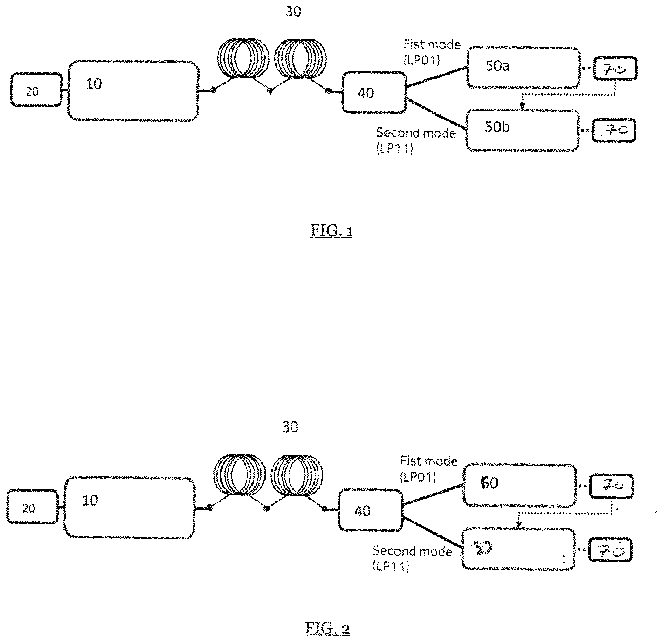

Fig. 1 shows a system according to an embodiment. An optical transmitter, in this case a laser 20 is coupled to a pulse generator 10 and a plurality of pulses are generated and transmitted along a multimode fibre 30. A mode demultiplexer 40 at the receiver end receives the signals from the multimode fibre 30 and splits the signal into a first spatial mode which in this embodiment is a first polarisation mode LP01 and a second polarisation mode LP11.

The first mode is the mode that the signal was originally transmitted along the fibre as and this is monitored using an intensity measurement device 50a. In response to digital signal processor 70 detecting a rate of change of variation in the intensity of the signal measured by intensity measurement device 50a rising above a predetermined level, the digital signal processor 70 will output a control signal to a second intensity measurement device 50b which will monitor for a signal output by the de-multiplexer in the second polarisation mode. When second intensity measurement device 50b detects a signal it transmits an indication of this to the digital signal processor 70 which determines the time between generation of the control signal triggered by detection of the original variations and detection of the second mode signal. The digital signal processor 70 will determine from the differences in time and from a knowledge of the difference in speeds of propagation of the two signals the distance to the event.

In this example embodiment, the two sensors 50a, 50b simply sense the intensity of the signals and the digital signal processor 70 uses variations in the rate of change of the intensity of the first mode signal to determine when an event happens and then uses the detection of an increase in intensity of the second mode signal to determine the location of the event. The location is determined from the difference in time between the two detections. Intensity measurement sensors are low cost sensors and can be used to provide an inexpensive system that still provides reasonable accuracy for determining the time and location of an event.

Fig. 2 shows an alternative embodiment where the sensor 60 for the first polarisation mode is a more complex state of polarisation sensor which detects the rate of change of the state of polarisation of the signal in the first mode. This can be used not only to detect that an event has occurred but also to detect the type of event that has occurred. In this regard, more information will be determined from variations in the state of polarisation of the signal than from its change in intensity and these could be used to characterise the event.

In this regard, the system may have a database of different possible events related to characteristic signal variations that such events will typically cause. A comparator within the digital signal processor can compare the variations in the signal with these known signals and output a prediction of the event that has occurred.

The location of the event can be determined as for the system in Fig. 1 by determining the difference in time between detection of a variation in the signal in the first spatial mode and receipt of the signal in the second spatial mode. In this regard, the circuitry 50 that detects the second spatial mode may be different simpler circuitry than that detecting the first spatial mode. In some embodiments it may be circuitry configured to determine intensity of the signal, rather than the more sophisticated and expensive state of polarisation measurement sensor. As the signal in the second spatial mode will have been generated from the fluctuations in the first spatial mode signal, it will generally carry less information regarding the event than the first spatial mode signal which will comprise these fluctuations.

The state of polarisation measurement sensor 60 may have a number of forms and in some embodiments it may be a coherent detector that detects the complex electrical field on both polarizations of the light that is transmitted and from this can determine such things as the change in amplitude phase and polarisation of the transmitted light. Changes in these different properties may be used in the characterisation of the signal to determine the type of event that has occurred. In this regard, the variations may have a particular frequency indicating a dynamic mechanical event, and perhaps also the nature of the event. For example, the frequency may be characteristic of the motor of a mechanical digger for example that may be operating near the optical fibre.

In some embodiments, the light of the laser is modulated to produce laser pulses of the order of 100 picoseconds in length with the predetermined frequency being of the order of KHz. In this regard, the detecting signal may have a wavelength of the order of 850 nanometres while the optical fibre may be a single mode fibre for data signals sent with a wavelength of the order of 1550 nanometres.

In some example embodiments orthogonal sequences such as Golay sequences instead of repeating pulses are used. These make the delay estimation more precise and thus enable the location to be more accurately determined. They may also be used to reduce the noise at signal reception which can increase the maximum reach of the system.

In summary, in example embodiments the monitoring of the state of polarisation of the first mode LP01 is used to determine when an event happens along a fibre. When an event is detected to have occurred, the received intensity traces of the second mode LP11 is recorded during a certain time, the start of recording being triggered by detection of variations in the state of polarisation of the first mode pulse. The event on the fibre couples the first mode pulse into the second mode, creating a pulse in the second mode. Due to the differential mode group delay DMGD, the second mode pulse does not arrive at the same time. The delay between the first mode pulse and the second mode pulse can be used to determine where the event occurs on the fibre. The fibre link can be more than 100km long, the main limitation being the power budget of the link.

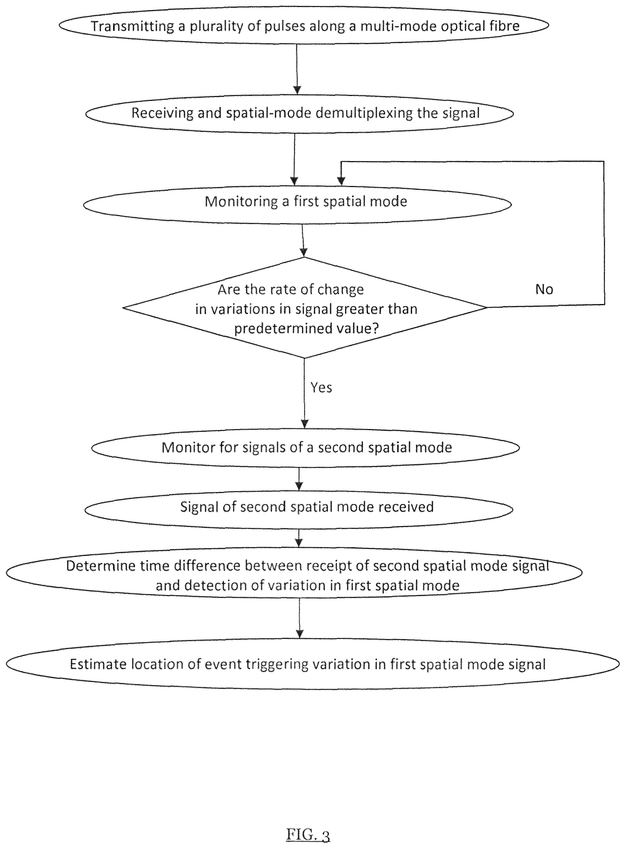

Fig. 3 shows a flow diagram illustrating steps of a method according to an embodiment. The method is a method for detecting and locating an event along an optical fibre and comprises an initial step of transmitting a signal along the optical fibre, the signal being a repeating pulse signal and having a wavelength such that the optical fibre acts as a multimode fibre for the signal.

Any event along the length of the fibre will cause disruption to the signal propagating through the fibre and this will cause variations in the first spatial mode of the signal which will couple into a further spatial mode within the multi-mode optical fibre causing a signal in this further spatial mode to propagate along with the original disrupted signal.

A receiver receives signals travelling along the fibre and demultiplexes the received signal into separate spatial modes. In this embodiment the signal is separated into two spatial modes a first and second spatial mode. The first spatial mode is monitored and it is determined whether there is a variation in the first spatial mode indicative of an event. In this embodiment, this is done by determining whether the rate of change of variations in the signal are greater than a predetermined value. If it is determined that such variations have occurred then the method monitors for a signal in the second spatial mode.

When a signal in the second spatial mode is detected the signal is recorded and a time difference between detection of the original variation in the first spatial mode signal and the arrival of the second spatial mode signal is determined and from this and a knowledge of the difference in propagation speeds of the two signals a location of the event is estimated and output.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

Although embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. An apparatus, comprising:
a spatial-mode demultiplexer configured to receive an optical signal transmitted through a multi-mode optical fibre and to demultiplex said received signal;
circuitry configured to receive and monitor signals output by said demultiplexer, and in response to detecting a variation in a first demultiplexed signal in a first spatial-mode, said variation being indicative of an event, said circuitry is configured to monitor for a second demultiplexed signal in a second spatial mode; wherein
said circuitry is configured to determine a time difference between receipt of said variation in said first demultipexed signal and detection of said second demultiplexed signal and to determine a location of said event triggering said variation from said time difference.

2. An apparatus according to claim 1, wherein said first demultiplexed signal comprises a signal with a Gaussian intensity profile and said first demultiplexed signal comprises a first linearly polarised mode LP01 signal.

3. An apparatus according to any preceding claim, wherein said second demultiplexed signal comprises a second linearly polarised mode LP11 signal.

4. An apparatus according to any preceding claim, wherein said circuitry configured to receive and monitor said demultiplexed signals comprises circuitry configured to measure an intensity of at least one of said signals.

5. An apparatus according to any preceding claim, wherein said circuitry configured to receive and monitor said demultiplexed signals comprises circuitry configured to measure a state of polarization of at least one of said signals.

6. An apparatus according to any preceding claim, wherein said circuitry configured to receive and monitor said demultiplexed signals comprises circuitry configured to measure the amplitude and phase of both polarizations of at least one of said signals.

7. An apparatus according to any preceding claim, said circuitry comprising:
first circuitry configured to receive and monitor said first demultiplexed signal; and
further circuitry configured to receive and monitor said second demultiplexed signal.

8. An apparatus according to any preceding claim, wherein said circuitry is configured to detect said variation in said signal by detecting a rate of change of a characteristic of said signal rising above a predetermined value.

9. An apparatus according to claim 7 or 8, wherein said first circuitry is configured to monitor a pattern of said variation in said signal and to determine a type of said event from said pattern.

10. A system comprising an apparatus according to any preceding claim, and further comprising a laser configured to transmit a signal into a portion of said optical fibre remote from said apparatus, said signal having a wavelength such that said optical fibre acts as a multimode fibre for said signal.

11. A system according to claim 10, wherein said laser is configured to transmit a pulse-like signal for providing an impulse response of said fibre.

12. A system according to claim 11, wherein said laser is configured to transmit a plurality of pulses.

13. A system according to claim 10 or 11, wherein said laser is configured to transmit a plurality of orthogonal sequences.

14. A system according to claim 13, wherein said laser is configured to transmit a plurality of Golay sequences.

15. A method comprising:
transmitting a signal along an optical fibre, said signal having a wavelength such that said optical fibre acts as a multimode fibre for said signal;
receiving a signal transmitted through said optical fibre;
demultiplexing said received signal into separate spatial modes;
monitoring a first demultiplexed signal; and
in response to detecting a variation in said first demultiplexed signals indicative of an event, monitoring for a signal in a second of said demultiplexed signals;
determining a time difference between receipt of said variation in said first demultiplexed signal and receipt of said second demultiplexed signal; and
determining a location of said event in dependence upon said determined time difference.
